**Europäisches Patentamt**

**European Patent Office**

**Office européen des brevets**

(19)

(11) Numéro de publication: **0 118 382**
**B1**

(12) # FASCICULE DE BREVET EUROPEEN

(45) Date de publication du fascicule du brevet:
**05.08.87**

(51) Int. Cl.⁴: **C 01 B 33/28, B 01 J 29/28**

(21) Numéro de dépôt: **84430006.1**

(22) Date de dépôt: **06.03.84**

(54) **Aluminosilicate cristallin perfectionné ou zéolite perfectionnée ayant la structure de l'offrétite.**

(30) Priorité: **07.03.83 FR 8303804**

(43) Date de publication de la demande:
**12.09.84 Bulletin 84/37**

(45) Mention de la délivrance du brevet:
**05.08.87 Bulletin 87/32**

(84) Etats contractants désignés:
**AT BE CH DE FR GB IT LI LU NL SE**

(56) Documents cités:
**DE - A - 2 511 975**
**FR - A - 1 592 354**
**FR - A - 2 156 001**
**US - A - 3 578 398**
**US - A - 4 093 699**

**Nouveau Journal de Chimie, vol. 8, no. 4-1984, p. 207-211**
**JOURNAL OF THE CHEMICAL SOCIETY, section A, partie II, 1970, pages 1470-1475, Letchworth, GB, R. AIELLO et al.: "Hydrothermal chemistry of silicates. Part XIV. Zeolite crystallisation in presence of mixed bases"**

(73) Titulaire: **CENTRE NATIONAL DE LA RECHERCHE SCIENTIFIQUE (CNRS), 15, Quai Anatole France, F-75007 Paris (FR)**

(72) Inventeur: **Fajula, François, 6 rue Jeu de Mail, F-34160 Teyran (FR)**
Inventeur: **Figueras, François, 1065 rue de l'Aiguelongue, No 82, F-34100 Montpellier (FR)**
Inventeur: **Moudafi, Latifa, Cité Universitaire Boutonnet Pavillon E No 18, F-34000 Montpellier (FR)**

(74) Mandataire: **Santarelli, Marc, Cabinet Rinuy et Santarelli 14, avenue de la Grande Armée, F-75017 Paris (FR)**

## Description

La présente invention concerne un aluminosilicate cristallin perfectionné ou zéolithe perfectionnée ayant la structure de l'offrétite et présentant des caractéristiques particulièrement intéressantes, notamment dans le domaine de la catalyse, de l'adsorption, de la séparation des gaz ou des échanges ioniques.

On sait que les offrétites sont des zéolithes dont la structure correspond à un empilement de cages cancrinites et de prismes hexagonaux. Le réseau ainsi constitué est ouvert et présente des canaux accessibles au travers de pores de 6 à 7 Å de diamètre. Ces zéolithes sont des catalyseurs potentiellement intéressants pour les réactions de transformation des hydrocarbures telles que de craquage, d'hydrocraquage, d'isomérisation et d'hydroisomérisation, les réactions d'isomérisation, de désalkylation et d'alkylation des aromatiques, les réactions de conversion du méthanol en essences et en oléfines, le déparaffinage et l'hydratation des oléfines, etc.

Toutefois, malgré leurs bonnes propriétés en tant que catalyseurs, les offrétites de synthèse actuellement connues ne présentent pas un stabilité thermique suffisante. On constante en effet une perte sensible de la cristallinité au cours d'un chauffage prolongé et/ou d'un chauffage à température élevée ainsi qu'un cokage et, partant, une perte consécutive d'activité et/ou de sélectivité ce qui, dans certaines opérations comme par exemple, dans le domaine de la catalyse, est au détriment de la rentabilité d'operations industrielles. C'est, entre autres, le cas des opérations de régénération des catalyseurs, des opérations de craquage à températures élevées, etc.

Or la présente invention fournit un nouvel aluminosilicate cristallin ayant le diagramme de diffraction de poudre aux rayons X, l'aire spécifique et le volume poreux à l'azote propres à l'offrétite et contenant au moins un métal choisi dans les groupes I, II, VI, VII, VIII (du tableau périodique), dans le groupe des terres rares, et/ou au moins un groupe ammonium ou ammonium quaternaire, ce nouvel aluminosilicate étant caractérisé par le fait qu'il présente un aspect des cristaux observés en microscopie électronique à balayage se présentant sous forme de prismes hexagonaux aux arêtes bien définies de 0,5 à 2,5 µm de long et 0,1 à 1 µm de large.

Suivant d'autres caractéristiques:

– Le nouvel aluminosilicate cristallin tel que défini ci-dessus présente une stabilité thermique se traduisant par l'absence de modification de la cristallinité après un chauffage pouvant atteindre 1050°C;
– Ce nouvel aluminosilicate cristallin peut être également sous forme protonique et présenter notamment:
un taux d'adsorption de 6 à 10% en poids de cyclohexane à 20°C sous une pression de 111,97 mbar (84 torrs) et de 15 à 20% d'eau à 20°C sous une pression de 26,66 mbar (20 torrs);

une bonne activité catalytique stable dans le temps, évaluée par référence à un taux de conversion de 6 à 12% dans le craquage du n-hexane, à 480°C avec une vitesse spatiale de 3 h⁻¹;
une sélectivité élevée de 100%, évaluée par référence à une réaction d'hydratation d'une oléfine en alcool;
un taux de conversion de 17% stable dans le temps, dans la réaction du cyclohexane à 450°C avec un vitesse spatiale de 1 h⁻¹.

Un aluminosilicate cristallin appartenant à la famille des offrétites, tel que défini ci-dessus, est nouveau à la connaissance du Demandeur, en ce sens que, non seulement, il présente, suivant la forme sous laquelle il se trouve, un ensemble ou une combinaison de propriétés et de caractéristiques que ne présentent pas les autres offrétites de synthèse connues, mais aussi et surtout, en ce sens qu'il a un aspect cristallin très particulier tel que défini ci-dessus alors que ces autres offrétites de synthèse présentent généralement la forme de billes ou de bâtonnets observés par microscopie électronique.

Aû surplus, l'aluminosilicate de l'invention offre un intérêt particulier dans le domaine de la catalyse, en ce sens que, contrairement aux autres offrétites connues, il présente, en plus des caractéristiques ci-dessus, un indice de contrainte inférieur à 2 et constant en fonction du temps de travail du catalyseur.

Le procédé permettant d'obtenir les produits selon l'invention est un procédé de cristallisation de tout type connu, à la condition de partir d'une solution-mère alcaline contenant au moins un métal appartenant à l'un des groupes rappelés ci-dessus, une source d'alumine et éventuellement un sel d'ammonium quaternaire en quantités telles que cette solution satisfasse les rapports molaires suivants:

$SiO_2/Al_2O_3 = 5 - 40$
$SiO_2/Alcalin = 1 - 2,6$
Sel d'ammonium quaternaire/Alcalin = $0 - 0,3$
$H_2O/Alcalin = 27 - 50$.

Les sources de silice et/ou d'alumine peuvent être quelconques. C'est ainsi que l'on pourra faire appel à des alumino-silicates d'origine naturelle (par exemple du type kaolin calciné ou non).

Comme exemple de procédé de cristallisation que l'on peut utiliser, on citera celui fondé sur le principe du vieillissement contrôlé de la solution aqueuse alcaline ou celui fondé sur le principe d'amorçage et de développement de la cristallisation par addition a une première solution aqueuse alcaline mère (dite de «synthèse») d'une petite quantité d'une seconde solution aqueuse (dite de «nucléation») de composition analogue à celle de la première solution mais contenant un agent dit «de nucléation» (en l'espèce l'hydroxyde ou le chlorure de tétraméthylammonium – TMAOH, ou TMACl par exemple).

Ces deux principes ont déjà été mis à profit pour l'obtention d'offrétites de synthèse différ- rentes dans leur structure cristalline et ne présentant pas la combinaison des caractéristiques et des propriétés du produit selon l'invention. On rappellera simplement pour mémoire et à titre de référence, le brevet britannique GB-A 1 188 043 et les brevets des Etats-Unis d'Amérique US-A 3 758 534, US-A 3 947 482 et US-A 3 578 398 mettant en oeuvre soit des composés de départ particuliers, soit des proportions particulières, soit des conditions opératoires particulières conduisant à des offrétites diverses dont les structures, les caractéristiques et les propriétés découlent de chaque technique utilisée.

La présente invention sera mieux comprise à la lumière des exemples suivants donnés à titre purement illustratif et nullement limitatif.

Exemple 1:

Obtention du produit de l'invention par cristallisation amorcée, à partir de métakaolin (kaolin calciné à 500°C sous air pendant 10 heures):

1) On prépare un gel A «de nucléation» de composition molaire: 6 $K_2O$, 2,56 $(Me_4N)_2O$, $Al_2O_3$, 15,3 $SiO_2$, 280 $H_2O$ à partir de $H_2O$: 15 g; KOH: 2,2 g; TMAOH, 5 $H_2O$: 3,05 g; métakaolin: 0,73 g; silice 2,63 g ($Me_4N$ représente le radical tétraméthylammonium et TMAOH est l'hydroxyde de tétraméthylammonium).

Le mélange est agité pendant 3 heures à température ambiante, puis vieilli sans agitation pendant 72 heures.

2) Un second gel B «de synthèse» ayant la composition molaire: 6 $K_2O$; $Al_2O_3$; 15,3 $SiO_2$; 254 $H_2O$ est obtenu à partir des mêmes composants que le gel A mais en absence de TMAOH, 5 $H_2O$.

3) A partir du gel A vieilli et du gel B fraîchement préparé, on prépare trois solutions AB:
– une contenant 25% de A et 75% de B (composition moyenne: 6 $K_2O$; 0,64 $(Me_4N)_2O$; $Al_2O_3$; 15,3 $SiO_2$; 260 $H_2O$)
– une contenant 5% de A et 95% de B (6 $K_2O$; 0,128 $(Me_4N)_2O$; $Al_2O_3$; 15,3 $SiO_2$; 255 $H_2O$)
– une contenant 2% de A et 98% de B (6$K_2O$; 0,05 $(Me_4N)_2O$; $Al_2O_3$; 15,3 $SiO_2$; 254 $H_2O$).

Chacune de ces solutions est placée dans une ampoule de verre, scellée et chauffée sous agitation pendant 17 heures à 150°C. Après filtration, lavage et séchage, les trois solides obtenus présentent un diffractogramme de rayons x caractéristique de l'offrétite (voir tableaux 1,2,3 ci-après) ne contenant pas d'autre phase cristallisée.

**Tableau 1**

| $\theta^0$ | $d_\text{Å}$ | h k l | $\dfrac{I}{Io} \times 100$ |
|---|---|---|---|
| 3,85 | 11,471 | 100 | 100 |
| 5,85 | 7,5571 | 001 | 30 |
| 6,70 | 6,6019 | 110 | 35 |
| 7,00 | 6,3203 | 101 | 15 |
| 7,75 | 5,7118 | 200 | 18 |
| 9,72 | 4,5622 | 201 | 34 |

**Tableau I (Suite)**

| | | | |
|---|---|---|---|
| 10,25 | 4,3286 | 210 | 44 |
| 11,85 | 3,7509 | 211 | 85 |
| 12,40 | 3,5869 | 102 | 63 |
| 13,50 | 3,2995 | 112 | 24 |
| 14,15 | 3,1508 | 202 | 29 |
| 15,70 | 2,8464 | 212 | 72 |
| 16,75 | 2,6726 | 302 | 17 |
| 18,07 | 2,4832 | | |

$$\begin{cases} a = 13,2664 \text{ Å} \\ c = 7,5466 \text{ Å} \end{cases}$$

**Tableau 2**

| $\theta^0$ | $d_\text{Å}$ | h k l | $\dfrac{I}{Io} \times 100$ |
|---|---|---|---|
| 3,90 | 11,324 | 100 | 100 |
| 5,80 | 7,6220 | 001 | 25 |
| 6,72 | 6,5823 | 110 | 58 |
| 7,02 | 6,3024 | 101 | 13 |
| 7,75 | 5,7118 | 200 | 11 |
| 9,75 | 4,5483 | 201 | 32 |
| 10,30 | 4,3078 | 210 | 60 |
| 11,70 | 3,7983 | 002 | 37 |
| 11,90 | 3,7353 | 211 | 111 |
| 12,45 | 3,5728 | 102 | 78 |
| 13,55 | 3,2875 | 112 | 28 |
| 14,25 | 3,1291 | 202 | 48 |
| 15,35 | 2,9097 | 311 | 17 |
| 15,80 | 2,8289 | 212 | 79 |
| 16,80 | 2,6649 | 302 | 22 |
| 18,15 | 2,4726 | | |

$$\begin{cases} a = 13,0312 \text{ Å} \\ c = 7,5119 \text{ Å} \end{cases}$$

**Tableau 3**

| $\theta^0$ | $d_\text{Å}$ | h k l |
|---|---|---|
| 3,80 | 11,622 | 100 |
| 5,82 | 7,5959 | 001 |
| 6,64 | 6,6613 | 110 |
| 7,00 | 6,3203 | 101 |
| 7,70 | 5,7487 | 200 |
| 9,70 | 4,5715 | 201 |
| 10,22 | 4,3412 | 210 |
| 11,62 | 3,8241 | 300 |
| 11,80 | 3,7666 | 211 |
| 12,40 | 3,5869 | 102 |
| 13,25 | 3,3606 | 220 |
| 14,15 | 3,1508 | 202 |
| 15,27 | 2,9245 | 311 |
| 15,60 | 2,8642 | 400 |
| 15,70 | 2,8464 | 210 |
| 16,72 | 2,6773 | 302 |
| 18,07 | 2,4832 | |

$$\begin{cases} a = 13,4683 \text{ Å} \\ c = 7,5455 \text{ Å} \end{cases}$$

L'examen des cristaux de zéolite obtenus à partir des trois solutions AB par microscopie électronique montre que ceux-ci se présentent sous forme de prismes hexagonaux aux formes régulières de 0,5 à 2,5 μm de long et 0,1 à 1 μm de large. (Les offrétites synthétiques actuellement connues présentent généralement la forme de billes ou de cigares).

Après calcination sous air à 470°C, le solide préparé à partir de la solution AB à 25% de A (zéolité 3–1) a une aire spécifique de 412 m²g⁻¹ et un volume poreux (mesuré à l'azote) de 0,26 ml/g⁻¹; le solide préparé à partir de la solution AB à 5% de A (zéolite 3–2) a une aire spécifique de 396 m²g⁻¹ et un volume poreux de 0,25 ml/g⁻¹ et le solide préparé à partir de la solution AB à 2% de A (zéolite 3–3) a une aire spécifique de 280 m²g⁻¹ et un volume poreux de 0,16 ml/g⁻¹.

L'analyse élémentaire effectuée plus spécialement sur la zéolite 3–2 donne la composition chimique suivante exprimée en moles d'oxydes:

$Al_2O_3$          0,88 $K_2O$
10,7 $SiO_2$       0,03 $Na_2O$
                   0,1 $(Me_4N)_2O$

Après chauffage de la zéolite sous flux d'air à 910°C pendant une heure, aucune perte de cristallinité n'est détectée aux rayons X. Par ailleurs, cette zéolite a été changée sous forme protonique (70% d'échange) en employant les méthodes bien connues dans l'art (échange par une solution d'un sel d'ammonium suivi d'une calcination à 500°C sous air pour décomposer les ions $NH_4^+$ et $TMA^+$).

Le produit ainsi obtenu est capable d'adsorber 6% en poids de cyclohexane à 20°C sous une pression de 111,97 mbar (84 torrs) et 16% en poids d'eau à 20°C sous une pression de 26,66 mbar (20 torrs).

Au surplus, appliqué comme catalyseur dans le craquage du n-hexane, il conduit à une conversion égale à 12%, stable dans le temps, à 480°C (conversion inchangée après 24 heures de travail) et avec une vitesse spatiale (poids d'hydrocarbure/poids de catalyseur x heure) de 3 h⁻¹.

Dans la désalkylation du cumène en propène et benzène, une conversion de 7% est obtenue à 400°C et une vitesse spatiale de 0,15 h⁻¹.

Exemple 2:
Obtention du produit de l'invention à partir de kaolin par cristallisation directe:
Une solution ayant la composition molaire:

6,9 $K_2O$; 2,97 $(Me_4N)_2O$; $Al_2O_3$; 17,5 $SiO_2$; 425 $H_2O$ est préparée à partir de $H_2O$ 20 g; KOH 2,2 g; kaolin 0,73 g; TMAOH, 5 $H_2O$ 3,05 g; silice 2,63 g.

Le mélange est agité à température ambiante pendant 3 heures, transvasé dans une ampoule en verre que l'on scelle et chauffe pendant 17 heures à 150°C. Le solide récupéré, lavé et séché présente un diffractogramme de rayons X caractéristique de l'offrétite comme le montre le tableau 4 ci-après:

Tableau 4

| $\theta^0$ | $d_\text{Å}$ | h k l |
|------|--------|-----|
| 3,80 | 11,622 | 100 |
| 5,80 | 7,622 | 001 |
| 6,65 | 6,6513 | 110 |
| 7,00 | 6,3203 | 101 |
| 7,70 | 5,7487 | 200 |
| 9,68 | 4,5762 | 201 |
| 10,24 | 4,3328 | 210 |
| 11,80 | 3,7666 | 211 |
| 12,35 | 3,6012 | 102 |
| 13,50 | 3,2995 | 112 |
| 14,10 | 3,1617 | 202 |
| 15,65 | 2,8553 | 212 |
| 16,70 | 2,6804 | 302 |

L'analyse chimique du solide donne la composition suivante:

$Al_2O_3$          0,86 $K_2O$
16,43 $SiO_2$      0,03 $Na_2O$
                   0,11 $(Me_4N)_2O$

Son aire spécifique après calcination à 540°C sous air est de 180 m²g⁻¹ et son volume poreux est de 0,13 ml/g⁻¹.

Le produit, obtenu après échange par des protons et activation et utilisé comme catalyseur, conduit à une conversion de 6% dans le craquage du n-hexane à 480°C avec une vitesse spatiale de 3 h⁻¹.

Exemple 3:
Obtention du produit de l'invention par cristallisation amorcée à partir de kaolin ou de métakaolin dans le gel A et d'halloysite non calcinée dans le gel B:
1) On prépare un gel A «de nucléation» à partir de kaolin ou de métakaolin ayant la composition comprise dans le domaine suivant:

1,96–15,8 $K_2O$; 0,1 à 6,8 $(Me_4N)_2O$; $Al_2O_3$; 5-40 $SiO_2$; 120-960 $H_2O$.
Ce gel est vieilli 72 heures à la température ambiante.
2) Un gel B «de synthèse» ayant la composition:
10 $K_2O$; $Al_2O_3$; 25 $SiO_2$; 480 $H_2O$ est préparé à partir de $H_2O$ 15 g, KOH 2,2 g, halloysite 0,57 g, silice 2,65 g.

On fait une solution AB à 5% de A. La même procédure que celle décrite dans l'exemple 1 conduit à une zéolite possédant le spectre de rayons X caractéristique de l'offrétite sans autre phase cristallisée, comme cela ressort du tableau 5 ci-après:

### Tableau 5

| $\theta^0$ | $d_{\text{Å}}$ | h k l | $\dfrac{I}{Io} \times 100$ |
|---|---|---|---|
| 3,85 | 11,471 | 100 | 100 |
| 5,86 | 7,5442 | 001 | 21 |
| 6,70 | 6,6019 | 110 | 34 |
| 7,05 | 6,2757 | 101 | 10 |
| 7,75 | 5,7118 | 200 | 11 |
| 9,75 | 4,5483 | 201 | 22 |
| 10,30 | 4,3078 | 210 | 34 |
| 11,70 | 3,7983 | 002 | 23 |
| 11,90 | 3,7353 | 211 | 53 |
| 12,45 | 3,5728 | 102 | 41 |
| 13,55 | 3,2875 | 112 | 16 |
| 14,20 | 3,1399 | 202 | 23 |
| 15,33 | 2,9134 | 311 | 7 |
| 15,75 | 2,8376 | 212 | 50 |
| 16,80 | 2,6649 | 302 | 12 |
| 18,10 | 2,4792 | | |

$$\begin{cases} a = 13{,}2664 \text{ Å} \\ c = 7{,}5271 \text{ Å} \end{cases}$$

Son analyse élémentaire donne la composition suivante:

$Al_2O_3$      1,37 $K_2O$
7,66 $SiO_2$      0,04 $Na_2O$
               0,01 $(Me_4N)_2O$

Les cristaux de zéolite, examinés par microscopie électronique à balayage, ont la même apparence que ceux obtenus dans les exemples précédents.

Après calcination sous air à 450°C, son aire spécifique est de 337 $m^2g^{-1}$ et son volume poreux de 0,25 ml/g. L'analyse thermique différentielle (vitesse de chauffe 10°C $mn^{-1}$) ne montre aucune perte de cristallinité jusqu'à 1050°C.

Exemple 4:
Obtention du produit selon l'invention par cristallisation amorcée à partir de kaolin (non calciné):
1) Un gel A «de nucléation» de composition:

8,89 $K_2O$; 3,8 $(Me_4N)_2O$; $Al_2O_3$; 22 $SiO_2$; 415 $H_2O$ est obtenu à partir de: eau 15 g; KOH 2,2 g; TMAOH, 5 $H_2O$ 3,05 g; kaolin 0,57 g; silice 2,63 g.
Ce gel est vieilli 72 heures à la température ambiante.
2) Un gel B «de synthèse» ayant la composition: 8,89 $K_2O$; $Al_2O_3$; 22 $SiO_2$, 380 $H_2O$ est préparé de la même manière que le gel A mais sans TMAOH. Ce gel est chauffé à 60–80°C jusqu'à dissolution du kaolin.
On fait une solution AB à 5% de A que l'on traite comme dans l'exemple 3.
Le solide obtenu présente un spectre de rayons X caractéristique de l'offrétite (voir tableau 6 ci-dessous) sans autre phase cristallisée. Les cristaux obtenus sont identiques à ceux décrits dans l'exemple 1 et leur composition chimique correspond à:

$Al_2O_3$      1,02 $K_2O$
7,8 $SiO_2$      0,03 $Na_2O$
            0,01 $(Me_4N)_2O$

### Tableau 6

| $\theta^0$ | $d_{\text{Å}}$ | h k l | $\dfrac{I}{Io} \times 100$ |
|---|---|---|---|
| 3,85 | 11,471 | 100 | 100 |
| 5,87 | 7,5314 | 001 | 22 |
| 6,72 | 6,5823 | 110 | 38 |
| 7,01 | 6,3113 | 101 | 12 |
| 7,75 | 5,7118 | 200 | 17 |
| 9,75 | 4,5483 | 201 | 35 |
| 10,27 | 4,3203 | 210 | 50 |
| 11,70 | 3,7983 | 002 | 40 |
| 11,87 | 3,7447 | 211 | 72 |
| 12,45 | 3,5728 | 102 | 60 |
| 13,55 | 3,2875 | 112 | 33 |
| 14,20 | 3,1399 | 202 | 34 |
| 15,75 | 2,8376 | 212 | 54 |
| 16,80 | 2,6649 | 302 | 19 |
| 18,15 | 2,4726 | | |

$$\begin{cases} a = 13{,}2858 \text{ Å} \\ c = 7{,}5069 \text{ Å} \end{cases}$$

Après calcination sous air pendant 3 heures à 540°C, 804°C et 912°C, les solides ont été analysés par rayons X (voir tableaux 7, 8 et 9 ci-dessous). Aucune perte de cristallinité n'est décelée après chacun de ces traitements.

### Tableau 7

| $\theta^0$ | $d_{\text{Å}}$ | h k l | $\dfrac{I}{Io} \times 100$ |
|---|---|---|---|
| 3,87 | 11,412 | 100 | 100 |
| 5,80 | 7,6220 | 001 | 22 |
| 6,70 | 6,6019 | 110 | 65 |
| 7,05 | 6,2757 | 101 | 12 |
| 7,75 | 5,7118 | 200 | 11 |
| 9,75 | 4,5483 | 201 | 19 |
| 10,37 | 4,2790 | 210 | 57 |
| 11,66 | 3,8111 | 300 | 29 |
| 11,86 | 3,7487 | 211 | 98 |
| 12,45 | 3,5728 | 102 | 64 |
| 13,35 | 3,3358 | 220 | 20 |
| 13,52 | 3,2947 | 112 | 31 |
| 14,22 | 3,1356 | 202 | 43 |
| 15,35 | 2,9097 | 311 | 18 |
| 15,65 | 2,8553 | 400 | 66 |
| 15,77 | 2,8341 | 212 | 73 |
| 16,80 | 2,6649 | 302 | 28 |
| 18,15 | 2,4726 | | |

$$\begin{cases} a = 13{,}1642 \text{ Å} \\ c = 7{,}5272 \text{ Å} \end{cases}$$

### Tableau 8

| $\theta^0$ | $d_{\text{Å}}$ | h k l | $\dfrac{I}{I_0} \times 100$ |
|---|---|---|---|
| 3,85 | 11,471 | 100 | 100 |
| 5,90 | 7,4932 | 001 | 22 |
| 6,72 | 6,5823 | 110 | 73 |
| 7,05 | 6,2757 | 101 | 13 |
| 7,75 | 5,7118 | 200 | 12 |
| 9,75 | 4,5483 | 201 | 19 |
| 10,27 | 4,3203 | 210 | 58 |
| 11,67 | 3,8079 | 300 | 30 |
| 11,87 | 3,7447 | 211 | 106 |
| 12,50 | 3,5587 | 102 | 73 |
| 13,50 | 3,2995 | 112 | 28 |
| 14,20 | 3,1399 | 202 | 44 |
| 15,65 | 2,8553 | 200 | 71 |
| 15,75 | 2,8376 | 210 | 81 |
| 16,80 | 2,8679 | 302 | 27 |
| 18,15 | 2,4726 | | |

$$\begin{cases} a = 13,2858 \text{ Å} \\ c = 7,4833 \text{ Å} \end{cases}$$

### Tableau 9

| $\theta^0$ | $d_{\text{Å}}$ | h k l | $\dfrac{I}{I_0} \times 100$ |
|---|---|---|---|
| 3,90 | 11,324 | 100 | 100 |
| 5,92 | 7,4680 | 001 | 17 |
| 6,75 | 6,5532 | 110 | 69 |
| 7,07 | 6,2580 | 101 | 11 |
| 7,76 | 5,7045 | 200 | 12 |
| 9,80 | 4,5253 | 201 | 15 |
| 10,30 | 4,3078 | 210 | 54 |
| 11,72 | 3,7919 | 002 | 27 |
| 11,90 | 3,7353 | 211 | 92 |
| 12,50 | 3,5587 | 102 | 62 |
| 13,32 | 3,3432 | 220 | 17 |
| 13,55 | 3,2875 | 112 | 25 |
| 14,25 | 3,1291 | 202 | 39 |
| 15,37 | 2,9060 | 311 | 13 |
| 15,70 | 2,8464 | 400 | 60 |
| 15,80 | 2,8289 | 212 | 68 |
| 16,80 | 2,6649 | 320 | 22 |
| 18,15 | 2,4726 | | |

$$\begin{cases} a = 13,0605 \text{ Å} \\ c = 7,4934 \text{ Å} \end{cases}$$

L'aire spécifique de l'échantillon calciné à 540°C est de 413 m$^2$g$^{-1}$ et son volume poreux de 0,25 ml/g$^{-1}$. Après traitement à 804°C, ces valeurs sont de 360 m$^2$g$^{-1}$ et 0,21 ml/g$^{-1}$.

L'aspect des cristaux, observés en microscopie électronique à balayage, n'est pas modifié après calcination à 804°C.

Après échange par des protons et activation, le produit obtenu utilisé comme catalyseur a la capacité d'adsorber 7,8% en poids de cyclohexane à 20°C sous une pression de 111,97 mbar (84 torrs) et 18,7% en poids d'eau à 20°C sous 26,66 mbar (20 torrs).

L'activité catalytique a été évaluée dans l'hydratation du n-butène dans un réacteur statique de 110 cm$^3$. A 200°C 65,84 mbar (65 atm.) de pression (400 mg de catalyseur, 0,21 mole d'oléfine, 0,92 mole d'eau), la conversion après 2 heures de réaction est de 3,1 moles %, ce qui correspond à un rendement de 1,45 mmoles h$^{-1}$g$^{-1}$.

Dans les mêmes conditions, une offrétite classique (SiO$_2$/Al$_2$O$_3 \sim 7$), échangée de façon analogue, conduit à une conversion de 1,8 moles %, soit un rendement de 0,83 mmole h$^{-1}$g$^{-1}$.

Par ailleurs, dans la réaction du cyclohexane à 450°C, avec une vitesse spatiale de 1 h$^{-1}$, on obtient une conversion de 17%, stable dans le temps (inchangée après 24 heures de travail). Les produits formés contiennent 20% de gaz (C$_1$–C$_3$), 10% d'hydrocarbures en C$_4$–C$_5$, 50% d'isomères (méthylcyclopentane) et 20% d'aromatiques (toluène et xylènes).

Dans les mêmes conditions, la décaline est convertie avec un taux de transformation de 10% et une sélectivité de 70% en essences.

Exemple 5:

On prépare un gel A de «nucléation» ayant la composition molaire:

3,5 K$_2$O; 3,5 Na$_2$O; 2,97 (Me$_4$N)$_2$O; Al$_2$O$_3$; 17,5 SiO$_2$; 325 H$_2$O à partir de: eau 15 g; KOH 1,1 g; NaOH 0,78 g; TMAOH, 5 H$_2$O 3,05 g; kaolin 0,73 g et silice 2,63 g.

Ce gel est vieilli trois jours à température ambiante.

Un second gel B «de synthèse» de composition: 6 K$_2$O; Al$_2$O$_3$; 15,3 SiO$_2$; 280 H$_2$O est obtenu à partir de: eau 15 g; KOH 2,2 g; métakaolin 0,73 g et silice 2,63 g.

On fait un mélange AB à 5% de A. Celui-ci est agité à température ambiante 1 h, transvasé dans une ampoule scellée et chauffé à 110°C pendant 72 heures, sans agitation.

Le solide obtenu après lavage et séchage présente un diffractogramme de rayons X caractéristique de l'offrétite très pure selon l'invention. Le solide chauffé à 920°C ne présente aucune perte de cristallinité aux rayons X.

Exemples 6, 7, 8 et 9:

Un gel de composition stoechiométrique: 6 K$_2$O; 0,2 (Me$_4$N)$_2$O; Al$_2$O$_3$; 15,3 SiO$_2$; 260 H$_2$O est préparé à partir de: H$_2$O 15 g; KOH 2,2 g; TMAOH, 5 H$_2$O 0,128 g; métakaolin 0,73 g et silice 2,63 g.

Ce gel est séparé en quatre parties. Celles-ci sont transvasées dans des tubes en verre, scellés et chauffés sans agitation pendant 17 heures, la première à 110°C (exemple 6), la deuxième à 160°C (exemple 7), la troisième à 170°C (exemple 8) et la quatrième à 180°C (exemple 9).

Les quatre solides obtenus présentent un diffractogramme de rayons X caractéristique de l'offrétite et un aspect de cristaux en MEB analogue à celui décrit plus haut.

**0 118 382**

L'analyse chimique conduit aux compositions suivantes:

| Exemple | 6 | 7 | 8 |
|---|---|---|---|
| $Al_2O_3$ | 1 | 1 | 1 |
| $SiO_2$ | 7,2 | 7,4 | 7,5 |
| $K_2O$ | 0,7 | 0,84 | 0,85 |
| $Na_2O$ | 0,02 | – | – |
| $(Me_4N)_2O$ | 0,3 | 0,17 | 0,2 |

Exemple 10:

Un mélange de composition stoechiométrique: 6,94 $K_2O$; 1,85 $(Me_4N)_2O$; $Al_2O_3$; 17,5 $SiO_2$; 411 $H_2O$ préparé à partir de: eau 20 g, KOH 2,2 g, TMAOH 5 $H_2O$ 1,9 g, kaolin 0,73 g et silice 2,63 g est traité à 150°C pendant 28 heures sous agitation. Le solide obtenu est analogue à celui décrit dans les exemples précédents; composition chimique: $Al_2O_3$; 10,8 $SiO_2$; 0,48 $K_2O$; 0,02 $NA_2O$; 0,5 $(Me_4N)_2O$.

Exemple 11:

On cristallise une solution ayant le même stoechiométrie que celle des exemples 6 à 9 mais préparée comme suit:

On fait une solution contenant: eau 15 g; KOH 2,2 g; métakaolin 0,73 g et silice 2,63 g que l'on agite jusqu'à homogénéisation puis que l'on laisse vieillir 48 heures à température ambiante.

A ce mélange vieilli, on rajoute 0,128 g de TMAOH 5 $H_2O$ et on agite 1 heure.

L'ensemble est ensuite chauffé pendant 72 heures à 110°C dans une ampoule scellée sans agitation.

Le solide récupéré a un diffractogramme de rayons X caractéristique de l'offrétite et se présente sous forme de cristaux tels que définis plus haut.

L'analyse élémentaire conduit à la composition suivante:

| $Al_2O_3$ | 0,8 $K_2O$ |
|---|---|
| 6,9 $SiO_2$ | 0,02 $Na_2O$ |
| | 0,16 $(Me_4N)_2O$ |

Exemple 12:

Une solution ayant la même composition stoechiométrique que dans les exemples 6 à 9 et 11 est préparée à partir de: eau 16,57 g; KOH 2,2 g; TMA Cl (chlorure de tétraméthylammonium) 0,144 g; métakaolin 0,73 g et silice 2,63 g.

Après cristallisation pendant 72 heures à 110°C, dans une ampoule scellée sans agitation, le solide obtenu correspond à de l'offrétite présentant les mêmes caractéristiques structurales que celles décrites dans les autres exemples.

Au surplus, pour toutes les offrétites décrites ci-dessus, sour leur forme protonique, les mesures de l'indice de contrainte faites par craquage catalytique compétitif de n-hexane et de méthylpentane conduisent à des valeurs comprises entre 0,8 et 2 stables avec le temps d'utilisation du catalyseur.

**Revendications**

1. Aluminosilicate cristallin ayant un diagramme de diffraction de poudre aux rayons X, l'aire spécifique et le volume poreux à l'azote propres à l'offrétite et contenant au moins un métal choisi dans les groupes $I_a$, $II_a$ et $II_b$, $VI_a$, $VII_a$ et $VII_b$, VIII (du tableau périodique), dans le groupe des terres rares, et/ou au moins un groupe ammonium ou ammonium quaternaire, cet aluminosilicate étant caractérisé par le fait qu'il présente un habitus des cristaux déterminé en microscopie électronique à balayage de prismes hexagonaux de 0,5 à 2,5 µm de long et 0,1 à 1 µm de large.

2. Aluminosilicate cristallin selon la revendication 1, caractérisé par le fait qu'il présente une stabilité thermique se traduisant par l'absence de modification de la cristallinité après un chauffage pouvant atteindre 1050°C.

3. Aluminosilicate cristallin selon la revendication 1, caractérisé par le fait qu'il peut se présenter sous forme protonique.

4. Aluminosilicate cristallin selon la revendication 3, caractérisé par le fait qu'il présente l'ensemble des propriétés suivantes:
- un taux d'adsorption de 6 à 10% en poids de cyclohexane à 20°C sous une pression de 111,97 mbar (84 torrs) et de 15 à 20% d'eau à 20°C sous une pression de 26,66 mbar (20 torrs);
- une bonne activité catalytique stable dans le temps, évaluée par référence à un taux de conversion de 6 à 12% dans le craquage du n-hexane, à 480°C avec une vitesse spatiale de 3 h⁻¹;
- une sélectivité élevée de 100%, évaluée par référence à une réaction d'hydratation d'une oléfine en alcool;
- un taux de conversion de 17% stable dans le temps, dans la réaction du cyclohexane à 450°C avec une vitesse spatiale de 1 h⁻¹.

5. Application des aluminosilicates cristallins selon l'une quelconque des revendications 1 à 4 dans les domaines de l'adsorption, de la séparation des gaz, des échanges ioniques et/ou de la catalyse.

**Patentansprüche**

1. Kristallines Aluminiumsilikat mit einem Pulverröntgenbeugungsdiagramm, dem spezifischen Bereich und dem Porenvolumen unter Stickstoff, die für Offretit charakteristisch sind, und mit einem Gehalt an mindestens einem Metall, ausgewählt aus den Gruppen $I_a$, $II_a$ und $II_b$, $VI_a$, $VII_a$ und $VII_b$, VIII (des Periodischen Systems), der Gruppe der seltenen Erden und/oder mindestens einer Ammonium- oder quaternären Ammoniumgruppe, welches Aluminiumsilikat dadurch gekennzeichnet ist, dass es eine Beschaffenheit der Kristalle, bestimmt im Elektronenmikroskop beim Abtasten von hexagonalen Prismen, von 0,5 bis 2,5 µm Länge und 0,1 bis 1 µm Breite aufweist.

2. Kristallines Aluminiumsilikat nach Anspruch 1, dadurch gekennzeichnet, dass es eine Wärmestabilität aufweist, die sich durch das Fehlen einer Änderung der Kristallinität nach Erhitzen, das 1050°C erreichen kann, zeigt.

3. Kristallines Aluminiumsilikat nach Anspruch 1, dadurch gekennzeichnet, dass es protonische Form aufweisen kann.

4. Kristallines Aluminiumsilikat nach Anspruch 3, dadurch gekennzeichnet, dass es die Kombination folgender Eigenschaften aufweist:

– einen Adsorptionsgrad von 6 bis 10 Gew.% Cyclohexan bei 20°C unter einem Druck von 111,97 mbar (84 Torr) und von 15 bis 20% Wasser bei 20°C unter einem Druck von 26,66 mbar (20 Torr),

– eine zeitlich stabile gute katalytische Aktivität, bewertet mit bezug auf einen Umsatzgrad von 6 bis 12% beim Kracken von n-Hexan bei 480°C mit einer Raumgeschwindigkeit von 3 h$^{-1}$,

– eine erhöhte Selektivität von 100%, bewertet mit bezug auf eine Hydratationsreaktion eines Olefins in Alkohol,

– einen zeitlich stabilen Umsatzgrad von 17% bei der Reaktion von Cyclohexan bei 450°C mit einer Raumgeschwindigkeit von 1 h$^{-1}$.

5. Verwendung von kristallinen Aluminiumsilikaten nach einem der Ansprüche 1 bis 4 auf den Gebieten der Adsorption, der Trennung von Gasen, von Ionenaustausch und/oder der Katalyse.

**Claims**

1. A crystalline alumino-silicate having a powder X-ray diffraction diagram, a specific area and a porous volume to nitrogen corresponding to offretite and containing at least one metal selected from the groups $I_a$, $II_a$ and $II_b$, $VI_a$, $VII_a$ and $VII_b$, VIII (of the Periodic Table), from the rare earth group, and/or at least an ammonium or quaternary ammonium group, said alumino-silicate being characterized by the fact that it presents an habitus of the crystals as observed by electronic scanning microscopy of hexagonal prisms of a length of 0.5 to 2.5 micrometers and a with of 0.1 to 1 micrometer.

2. A crystalline alumino-silicate according to claim 1, characterized by the fact that it presents a thermal stability resulting in the absence of modification of crystallinity after a heating that may reach 1050°C.

3. A crystalline alumino-silicate according to claim 1, characterized by the fact that it presents itself in a protonic form.

4. A crystalline alumino-silicate according to claim 3, characterized by the fact that it presents all of the following properties:

– an adsorption rate of 6 to 10% by weight of cyclohexane at 20°C under a pressure of 111.97 mbars (84 torrs) and from 15 to 20% of water at 20°C under a pressure of 26.66 mbars (20 torrs);

– a good time stable catalytic activity estimated by reference to a conversion rate of 6 to 12% in the cracking of n-hexane at 480°C with a spatial speed of 3 h$^{-1}$;

– a high selectivity of 100% evaluated by reference to a hydratation reaction of an olefin in alcohol;

– a conversion rate of 17% stable in the course of time in the reaction of cyclohexane at 450°C with a spatial speed of 1 h$^{-1}$.

5. Application of the crystalline aluminosilicates according the anyone of claims 1 to 4 in the domains of adsorption, separation of gases, ionic exchanges and/or catalysis.